# EUROPÄISCHE PATENTANMELDUNG

(11) **EP 3 103 330 A1**
(43) Veröffentlichungstag der Anmeldung: **14.12.2016**
(21) Anmeldenummer: 15171669.3
(22) Anmeldetag: 11.06.2015
(51) Int. Cl.: A01K 91/06, A01K 97/02

(54) **VORRICHTUNG ZUR AUSBRINGUNG VON PELETTARTIG AUSGEBILDETEN LOCKMITTELN IN DER ANGELFISCHEREI**

(71) Anmelder: Deola, Thomas, 4334 Sisseln (CH)
(72) Erfinder: Deola, Thomas, 4334 Sisseln (CH)
(74) Vertreter: Limbeck, Achim

(57) **Zusammenfassung**

Die vorliegende Erfindung betrifft eine Vorrichtung (1) zur Ausbringung von pelettartig ausgebildeten Lockmitteln (2) in der Angelfischerei, die gemeinsam mit dem Angelhaken und dessen Köder zum Auswerfen mittels einer Angel ausgebildet ist. Die Vorrichtung ist dadurch gekennzeichnet, dass sie mindestens ein Halteteil (3) umfasst, an dem zumindest ein Lockmittel (2) anordbar ist, wobei das Lockmittel (2) an dem Halteteil (3) durch eine an der Vorrichtung (1) vorgesehene Einrichtung (5) zum Entfernen des zumindest einen Lockmittels (2) von dem Halteteil (3) durch Auslösen oder Lösen einer das Halteteil (3) und/oder die Einrichtung (5) mittelbar oder unmittelbar beaufschlagenden, elastischen Kraft (4) gelöst wird.

## Beschreibung

### Technisches Gebiet

Die vorliegende Erfindung betrifft eine Vorrichtung zur Ausbringung von pelettartig ausgebildeten Lockmitteln in der Angelfischerei, insbesondere zum Feederfischen, die gemeinsam mit dem Angelhaken und dessen Köder zum Auswerfen mittels einer Angel ausgebildet ist.

### Stand der Technik

Aus dem Stand der Technik sind Vorrichtung zur Ausbringung von pelettartig ausgebildeten Lockmitteln (sog. Boilies) bereits in Form von sog. Futterkörben sowie wasserlöchlichen Behältnissen (Säcke, Strümpfe, Schläuche, etc.) aus PVA-Material bekannt.

In der Druckschrift DE 203 04 216 U1 ist ein Futterkorb offenbart, der ist dazu ausgelegt, durch sein hohes Gewicht nach dem Auswerfen an den Gewässergrund abzusinken und sich dort über Klappbügel zu verankern bzw. zu verhaken. Nachteilig hierbei ist in erster Linie, dass eine individuell zeitversetzte Ausgabe der Lockmittel nicht erfolgen kann, da der Futterkorb aus einem wasserbeständigen Material gefertigt ist.

Das Gebrauchsmuster DE 20 2014 006 742 U1 zeigt einen Futterkorb, der von einer Angelschnur durchsetzt ist und somit nach dem Auswerfen oberhalb eines Angelhakens positioniert wird. Der Futterkorb löst sich nach dem Auswerfen im Wasser auf und gibt das enthaltene Futter als Lockmittel frei. Nachteilig hierbei ist vor allem der hohe Kostenaufwand, der sich durch die Herstellung dieses Einmalfutterkorbes ergibt. Ferner ist auch das Befestigen eines neuen Futterkorbes für den Angler sehr mühselig und zeitaufwendig.

Ein weiterer Nachteil bestehender Futterkörbe besteht darin, dass diese in ihrer Handhabung sehr umständlich sind, nicht selten kommt es beim Auswerfen und der Montage zu einem Verheddern der Angelschnur.

### Darstellung der Erfindung

Der vorliegenden Erfindung liegt die Aufgabe zu Grunde, eine Vorrichtung zu schaffen, welche die vorgenannten Nachteile ausräumt, welche einfach zu handhaben und kostengünstig in ihrer Herstellung ist.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen der erfindungsgemäßen Vorrichtung sind in den abhängigen Unteransprüchen angegeben.

Erfindungsgemäß ist eine Vorrichtung der eingangs genannten Art dadurch gekennzeichnet, dass die Vorrichtung mindestens ein Halteteil umfasst, an dem zumindest ein Lockmittel anordbar ist, wobei das Lockmittel an dem Halteteil durch eine an der Vorrichtung vorgesehene Einrichtung zum Entfernen des zumindest einen Lockmittels von dem Halteteil durch Auslösen oder Lösen einer das Halteteil und/oder die Einrichtung mittelbar oder unmittelbar beaufschlagenden, elastischen Kraft gelöst wird.

Der Vorteil der erfindungsgemäßen Vorrichtung besteht in erster Linie darin, dass das Lockmittel durch die Verwendung eines kraftbeaufschlagten Halteteils zeitabhängig ausgelöst werden kann. Die Verwendung der Vorrichtung erlaubt darüber hinaus eine verhedderfreie Montage und Handhabung.

Das Auslösen oder Lösen der das Halteteil und/oder die Einrichtung mittelbar oder unmittelbar beaufschlagenden, elastischen Kraft erfolgt dabei besonders bevorzugt mittels eines die Kraftbeaufschlagung haltenden, wasserlöslichen Formkörpers, wobei das Auflösen des Formkörpers im Wasser ein Lösen der Kraftbeaufschlagung bewirkt.

### Kurzbeschreibung der Zeichnungen

Weitere Ziele, Merkmale, Vorteile und Anwendungsmöglichkeiten der erfindungsgemäßen Vorrichtung ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

In den Zeichnungen zeigen
Fig.1 die erfindungsgemäße Vorrichtung in einer bevorzugten Ausführungsform in perspektivischer Ansicht;
Fig.2 die Vorrichtung wie in Fig.1 ohne Einrichtung;
Fig.3 die Vorrichtung wie in Fig.2 mit abgetrennten Lockmitteln.

### Ausführung der Erfindung

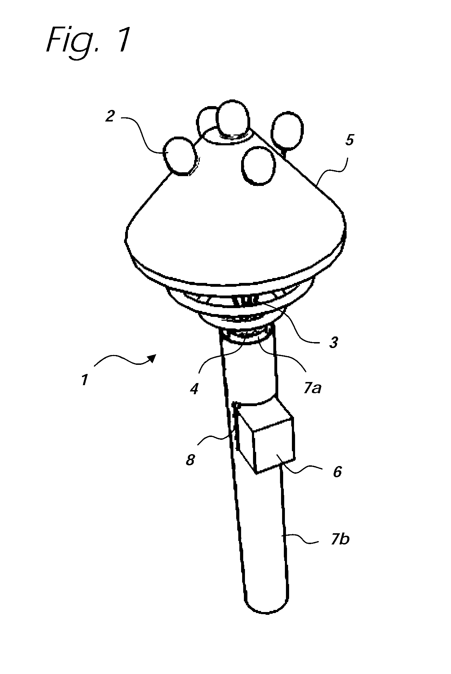

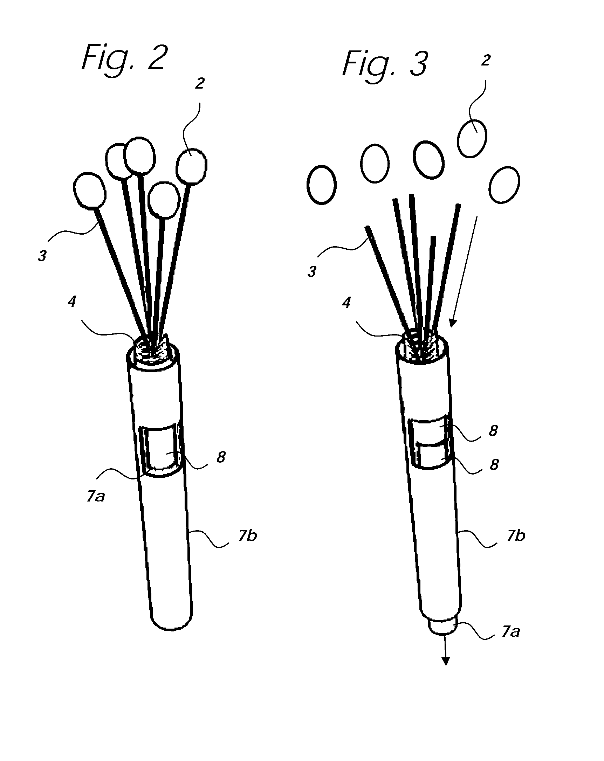

Wie aus Fig.1 ersichtlich, umfasst die erfindungsgemäße Vorrichtung 1 vorzugsweise zylindrisch ausgebildete Hohlkörper 7a,7b, wobei ein unterer Hohlkörper 7a teleskopisch (siehe Fig.3) in einen oberen Hohlkörper 7b in der Höhe verlagerbar eingeschoben ist und mindestens ein Hohlkörper 7a,7b elastisch kraftbeaufschlagt 4 ist. In der in Fig.1 dargestellten Ausführungsform der Vorrichtung 1 sind mehrere Halteteile 3 vorgesehen, an denen jeweils ein Lockmittel 2 angeordnet ist.

Die dargestellten Halteteile 3 sind vorzugsweise stangenartig ausgebildet und an einem kraftbeaufschlagten Hohlkörper 7a derart befestigt, dass sie durch Auslösen oder Lösen der den Hohlkörper 7a beaufschlagenden, elastischen Kraft 4 aus der Einrichtung 5 gezogen werden, so dass sich die Lockmittel 2 von den Halteteilen lösen (siehe Fig.3).

In einer weiteren, nicht dargestellten Ausführungsform können die Halteteile 3 auch zumindest teilweise in die Hohlkörper 7a,7b hineinragen und/oder durch sie hindurchragen.

Das Auslösen oder Lösen der das Halteteil 3 mittelbar beaufschlagenden, elastischen Kraft 4 erfolgt in einer bevorzugten in Fig.1 dargestellten Ausführung mittels eines die Kraftbeaufschlagung 4 an dem mindestens einen Hohlkörper 7a,7b haltenden, wasserlöslichen Formkörpers 6, vorzugsweise mittels eines Zuckerwürfels, wobei das Auflösen des Formkörpers 6 im Wasser ein Lösen der Kraftbeaufschlagung 4 an dem mindestens einen Hohlkörper 7a,7b bewirkt.

Die elastische Kraftbeaufschlagung 4 erfolgt vorzugsweise mittels mindestens einer Feder 4, welche an den Halteteilen 3, an der Einrichtung 5 und/oder an einem oder mehreren Hohlkörpern 7a,7b anliegt. In der in den Fign.1-3 dargestellten Ausführung ist die Feder 4 oberhalb des Hohlkörpers 7a angeordnet und drückt diesen gemeinsam mit den am dem Hohlkörper 7a angebrachten Halteteilen 3 nach unten. Durch das Runterdrücken werden die Halteteile 3 aus der Einrichtung 5 gezogen und die Lockmittel 2 (hier in Form von Boilies) lösen sich von den Halteteilen 3.

Als elastische Kraftbeaufschlagung kommen darüber hinaus sämtliche denkbaren elastischen Mittel, bspw. elastische Kunststoffverbindungen in Betracht.

An den Längsseiten der Hohlkörper 7a,7b ist - wie aus Fig.1 ersichtlich - vorzugsweise jeweils eine Ausnehmung 8 vorgesehen, wobei die Ausnehmungen 8 derart ausgebildet und an den Hohlkörpern 7a,7b angeordnet sind, dass diese sich bei Vorliegen der Kraftbeaufschlagung 4 überlagern und in dieser sich überlagerten Ausrichtung zur Aufnahme eines wasserlöslichen Formkörpers 6 ausgebildet sind, wobei der Formkörper 6 durch die auf den mindestens einen Hohlkörper 7a,7b einwirkenden Kraftbeaufschlagung 4 zwischen den Ausnehmungen 8 eingeklemmt ist.

Die Einrichtung 5 ist in einer bevorzugten Ausführungsform (Fig.1) als ein oberhalb der Hohlkörper 7a,7b angeordneter Formkörper 5 ausgebildet, durch dessen ausgebildete Öffnungen 5a mehrere mit Lockmitteln 2 bestückte, stangenartig ausgebildete Halteteile 3 ragen.

Der Formkörper 5 kann bspw. auch ein handelsüblicher Futterkorb sein oder jegliches anderes Formgebilde, welches ein Ablösen der Lockmittel 2 erlaubt, indem die Halteteile 3 durch dieses hindurchragen, wobei die an dem Formgebilde vorgesehenen Öffnungen 5a für die Halteteile 3 in ihrem Durchmesser stets kleiner ausgebildet sind als die Lockmittel 2.

In der in den Fign.1-3 dargestellten Ausführungsform der Vorrichtung ist die Einrichtung 5 ein Gewichtskörper, vorzugsweise ein Bleikörper, welcher Öffnungen 5a zur durchführenden Aufnahme der Halteteile 3 umfasst.

Ganz besonders bevorzugt ist gemäß den Fign.1-3 unterhalb dieses Gewichtskörpers ein Futterkorbgehäuse vorgesehen.

Wie aus den Fign.1-3 ersichtlich, sind vorzugsweise mehrere, ganze, besonders bevorzugt spießartige Halteteile 3 vorgesehen, welche in Richtung der Einrichtung 5 kegelförmig verlaufend ausgerichtet sind.

Die erfindungsgemäße Vorrichtung beschränkt sich in ihrer Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Vorrichtung
- 2: Lockmittel
- 3: Halteteil
- 4: elastisch, beaufschlagende Kraft / Feder
- 5: Einrichtung
- 6: wasserlöslicher Formkörper
- 7a,7b: zylindrisch ausgebildete Hohlkörper
- 8: Ausnehmungen

## Patentansprüche

1. Vorrichtung (1) zur Ausbringung von pelettartig ausgebildeten Lockmitteln (2) in der Angelfischerei, die gemeinsam mit dem Angelhaken und dessen Köder zum Auswerfen mittels einer Angel ausgebildet ist,
**dadurch gekennzeichnet, dass**
die Vorrichtung (1) mindestens ein Halteteil (3) umfasst, an dem zumindest ein Lockmittel (2) anordbar ist, wobei das Lockmittel (2) an dem Halteteil (3) durch eine an der Vorrichtung (1) vorgesehene Einrichtung (5) zum Entfernen des zumindest einen Lockmittels (2) von dem Halteteil (3) durch Auslösen oder Lösen einer das Halteteil (3) und/oder die Einrichtung (5) mittelbar oder unmittelbar beaufschlagenden, elastischen Kraft (4) gelöst wird.

2. Vorrichtung (1) nach Anspruch 1,
**dadurch gekennzeichnet, dass**
das Auslösen oder Lösen der das Halteteil (3) und/oder die Einrichtung (5) mittelbar oder unmittelbar beaufschlagenden, elastischen Kraft (4) mittels eines die Kraftbeaufschlagung (4) haltenden, wasserlöslichen Formkörpers (6) erfolgt, wobei das Auflösen des Formkörpers (6) im Wasser ein Lösen der Kraftbeaufschlagung (4) bewirkt.

3. Vorrichtung (1) nach den Ansprüchen 1 und 2,
**dadurch gekennzeichnet, dass**
sie zylindrisch ausgebildete Hohlkörper (7a,7b) umfasst, wobei ein unterer Hohlkörper (7a) teleskopisch in einen oberen Hohlkörper (7b) in der Höhe verlagerbar eingeschoben ist und mindestens ein Hohlkörper (7a,7b) elastisch kraftbeaufschlagt (4) ist.

4. Vorrichtung (1) nach Anspruch 3,
**dadurch gekennzeichnet, dass**
das mindestens eine Halteteil (3) stangenartig ausgebildet ist und zumindest teilweise in die Hohlkörper (7a,7b) hineinragt und/oder durch sie hindurchragt, wobei das mindestens eine Halteteil (3) an einem kraftbeaufschlagten Hohlkörper (7a,7b) derart befestigt ist, dass es durch Auslösen oder Lösen der den Hohlkörper (7a,7b) beaufschlagenden, elastischen Kraft (4) aus der Einrichtung (5) gezogen wird, so dass sich das Lockmittel (2) von dem Halteteil (3) löst.

5. Vorrichtung (1) nach einem der vorangegangenen Ansprüche,
**dadurch gekennzeichnet, dass**
das Auslösen oder Lösen der das Halteteil (3) mittelbar beaufschlagenden, elastischen Kraft (4) mittels eines die Kraftbeaufschlagung (4) an dem mindestens einen Hohlkörper (7a,7b) haltenden, wasserlöslichen Formkörpers (6) erfolgt, wobei das Auflösen des Formkörpers (6) im Wasser ein Lösen der Kraftbeaufschlagung (4) an dem mindestens einen Hohlkörper (7a,7b) bewirkt.

6. Vorrichtung (1) nach einem der vorangegangenen Ansprüche,
**dadurch gekennzeichnet, dass**
die elastische Kraftbeaufschlagung (4) mittels mindestens einer Feder (4) erfolgt.

7. Vorrichtung (1) nach einem der vorangegangenen Ansprüchen 3 bis 6,
**dadurch gekennzeichnet, dass**
an den Längsseiten der Hohlkörper (7a,7b) jeweils eine Ausnehmung (8) vorgesehen ist, wobei die Ausnehmungen (8) derart ausgebildet und an den Hohlkörpern (7a,7b) angeordnet sind, dass diese sich bei Vorliegen der Kraftbeaufschlagung (4) überlagern und in dieser sich überlagerten Ausrichtung zur Aufnahme des wasserlöslichen Formkörpers (6) ausgebildet sind, wobei der Formkörper (6) durch die auf den mindestens einen Hohlkörper (7a,7b) einwirkenden Kraftbeaufschlagung zwischen den Ausnehmungen (8) eingeklemmt ist.

8. Vorrichtung (1) nach einem der vorangegangenen Ansprüche,
**dadurch gekennzeichnet, dass**
die Einrichtung (5) als ein oberhalb der Hohlkörper (7a,7b) angeordneter Formkörper (5) ausgebildet ist, durch dessen Öffnungen (5a) mehrere mit Lockmitteln (2) bestückte, stangenartig ausgebildete Halteteile (3) ragen.

9. Vorrichtung (1) nach einem der vorangegangenen Ansprüche,
**dadurch gekennzeichnet, dass**
die Einrichtung (5) ein Gewichtskörper ist.

10. Vorrichtung (1) nach einem der vorangegangenen Ansprüche,
**dadurch gekennzeichnet, dass**
die Einrichtung (5) ein Futterkorb ist.

11. Vorrichtung (1) nach Anspruch 9,
**dadurch gekennzeichnet, dass**
unterhalb des Gewichtskörpers ein Futterkorbgehäuse vorgesehen ist.

12. Vorrichtung (1) nach einem der vorangegangenen Ansprüche,
**dadurch gekennzeichnet, dass**
das mindestens eine Halteteil (3) spießartig ausgebildet sind.

13. Vorrichtung (1) nach einem der vorangegangenen Ansprüche,
**dadurch gekennzeichnet, dass**
mehrere Halteteile (3) vorgesehen sind, welche in Richtung der Einrichtung (5) kegelförmig verlaufend ausgerichtet sind.
